# EUROPEAN PATENT SPECIFICATION

(11) **EP 2 245 387 B1**
(45) Date of publication and mention of the grant of the patent: **20.12.2017**
(21) Application number: 08727848.7
(22) Date of filing: 17.01.2008
(51) Int. Cl.: F25B 49/02, F25B 9/00

(54) **CAPACITY MODULATION OF REFRIGERANT VAPOR COMPRESSION SYSTEM**
KAPAZITÄTSMODULIERUNG EINER KÄLTEMITTELDAMPFKOMPRESSIONSANLAGE
MODULATION DE CAPACITÉ D'UN SYSTÈME DE COMPRESSION DE VAPEUR DE FLUIDE FRIGORIGÈNE

(43) Date of publication of application: 03.11.2010
(73) Proprietor: Carrier Corporation, Farmington, CT 06034 (US)
(72) Inventor: HUFF, Hans-Joachim, Manlius, NY 13104 (US)
(74) Representative: Leckey, David Herbert
(86) International application number: PCT/US2008/051328
(87) International publication number: WO 2009/091401

(56) References cited:
- WO-A1-2007/046791
- WO-A1-2008/079122
- WO-A2-2008/100261
- DD-A5- 288 207
- JP-A- S57 135 286
- US-A1- 2004 007 003
- US-A1- 2004 007 003
- US-A1- 2005 235 684
- US-A1- 2005 274 132
- US-B2- 6 807 819
- US-B2- 6 938 438

## Description

### Field of the Invention

This invention relates generally to refrigerant vapor compression systems and, more particularly, to efficient capacity modulation of refrigerant vapor compression systems, including transport refrigeration refrigerant vapor compression systems using carbon dioxide refrigerant and operating in a transcritical cycle.

### Background of the Invention

Refrigerant vapor compression systems are well known in the art and commonly used in transport refrigeration systems for refrigerating air supplied to a temperature controlled cargo space of a truck, trailer, container or the like for transporting perishable items. Refrigerant vapor compression systems are also commonly used in commercial refrigeration systems associated with supermarkets, convenience stores, restaurants, and other commercial establishments for refrigerating air supplied to a cold room or a refrigerated display merchandiser for storing perishable food items. Refrigerant vapor compression systems are also commonly used for conditioning air to be supplied to a climate controlled comfort zone within a residence, office building, hospital, school, restaurant or other facility. Typically, such refrigerant vapor compression systems include a compressor, an air-cooled condenser, an evaporator and an expansion device, commonly a thermostatic or electronic expansion valve, disposed upstream, with respect to refrigerant flow, of the evaporator and downstream of the condenser. These basic refrigerant system components are interconnected by refrigerant lines in a closed refrigerant circuit, arranged in accord with known refrigerant vapor compression cycles.

Traditionally, most of these refrigerant vapor compression systems operate at subcritical refrigerant pressures. Refrigerant vapor compression systems operating in the subcritical range are commonly charged with conventional fluorocarbon refrigerants such as, but not limited to, hydrochlorofluorocarbons (HCFCs), such as R22, and more commonly hydrofluorocarbons (HFCs), such as R134a, R410A and R407C. In today's market, greater interest is being shown in "natural" refrigerants, such as carbon dioxide, for use in air conditioning applications, commercial refrigeration applications, and transport refrigeration applications instead of HFC refrigerants. However, because carbon dioxide has a low critical temperature, most refrigerant vapor compression systems charged with carbon dioxide as the refrigerant are designed for operation in the transcritical pressure regime. For example, transport refrigerant vapor compression systems having an air cooled refrigerant heat rejection heat exchanger operating in environments having ambient air temperatures in excess of the critical temperature point of carbon dioxide, 31.1°C (88°F), must also operate at a compressor discharge pressure in excess of the critical point pressure for carbon dioxide, 7.38 MPa (1070 psia) and therefore will operate in a transcritical cycle. In refrigerant vapor compression systems operating in a transcritical cycle, the refrigerant heat rejection heat exchanger operates as a gas cooler rather than a condenser and operates at a refrigerant temperature and pressure in excess of the refrigerant's critical point, while the evaporator operates at a refrigerant temperature and pressure in the subcritical range.

In transport refrigerant applications, the refrigerant vapor compression system must be capable of operating in a pull-down mode and in a set point control mode. The refrigerant vapor compression system operates in the pull-down mode when the cargo space is loaded with perishable items having a temperature significantly in excess of the desired storage temperature for transport of those items. For example, it is customary to load fruit and vegetables directly from the picking field into the cargo storage space of a truck, a trailer or an intermodal transport container. Thus, it is desirable to rapidly reduce the temperature of the product within the cargo storage space from an ambient temperature at which the product was loaded to a desired storage temperature for transport, typically between about 1°C to about 5°C (about 34°F to about 40°F) for refrigerated food items and under 0°C (32°F) for frozen food items. Accordingly, the refrigerant vapor compression system must be designed with sufficient capacity at full load operation to sufficiently cool the air circulating from the cargo storage space through the evaporator of the refrigerant vapor compression system to rapidly draw down the temperature of the product within the cargo storage space.

However, once the cargo storage space has been cooled down to the desired storage temperature for transport of the particular cargo being transported, the refrigeration vapor compression system operates in a set point control mode. In this operating mode, the refrigerant vapor compression system must maintain the temperature within the cargo storage space within a relatively narrow plus/minus range of a set point temperature equal to the desired transport temperature for the particular product stored therein. To avoid over cooling of the product, the refrigerant vapor compression system must be operated at a reduced refrigeration capacity substantially less than the full load refrigerant capacity of the system to avoid over cooling of the air circulating from the cargo storage space.

WO 2008/079122 A1 discloses pulse width modulation with discharge to suction bypass, and US 2004/0007003 A1 discloses a refrigeration control. Document WO 2007/046791 is a remote diagnostics system for a refrigerant system including an unloader circuit, and discloses the features of the preamble of claim 1.

### Summary of the Invention

In an aspect of the invention, a refrigerant vapor compression system is provided as claimed in claim 1.

The controller, in a first operating mode, positions the unload circuit flow control device in a closed position and positions the first flow control device in an open position to operate the refrigerant vapor compression system in a loaded cycle. In the first operating mode, the controller may also modulate the expansion device.

In an embodiment, the refrigerant vapor compression system further includes a second flow control device disposed in the primary refrigerant circuit downstream with respect to refrigerant flow of the refrigerant heat absorption heat exchanger and upstream with respect to refrigerant flow of the suction inlet of the compression device. In this embodiment, the outlet of the unloaded refrigerant line is in refrigerant flow communication with the primary refrigerant circuit at a second location downstream with respect to refrigerant flow of the second flow control device and upstream with respect to refrigerant flow of the suction inlet to the compression device. In this embodiment, in the first operating mode, the controller positions the unload circuit flow control device in a closed position and positions each of the first flow control device and the second flow control device in an open position to operate the refrigerant vapor compression system in a loaded cycle. In the second operating mode, the controller positions the unload circuit flow control device in an open position and positions each of the first flow control device and the second flow control device in a closed position to operate the refrigerant vapor compression system in an unloaded cycle.

### Brief Description of the Drawings

For a further understanding of these and other objects of the invention, reference will be made to the following detailed description of the invention which is to be read in connection with the accompanying drawing, where:
Figure 1 is a schematic diagram illustrating a first exemplary embodiment of a refrigerant vapor compression system in accord with the invention;
Figure 2 is a schematic diagram illustrating a second exemplary embodiment of a refrigerant vapor compression system in accord with the invention; and
Figure 3 is a schematic diagram illustrating a third exemplary embodiment of a refrigerant vapor compression system in accord with the invention.

### Detailed Description of the Invention

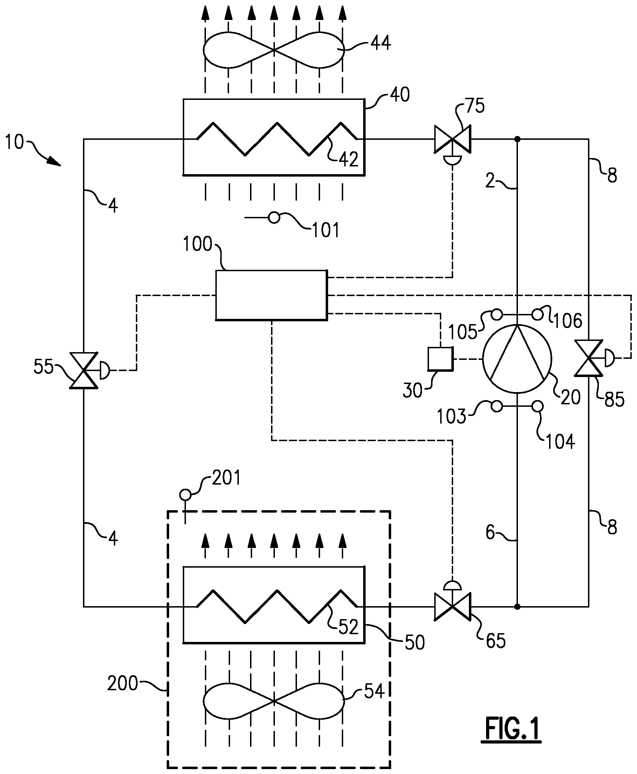

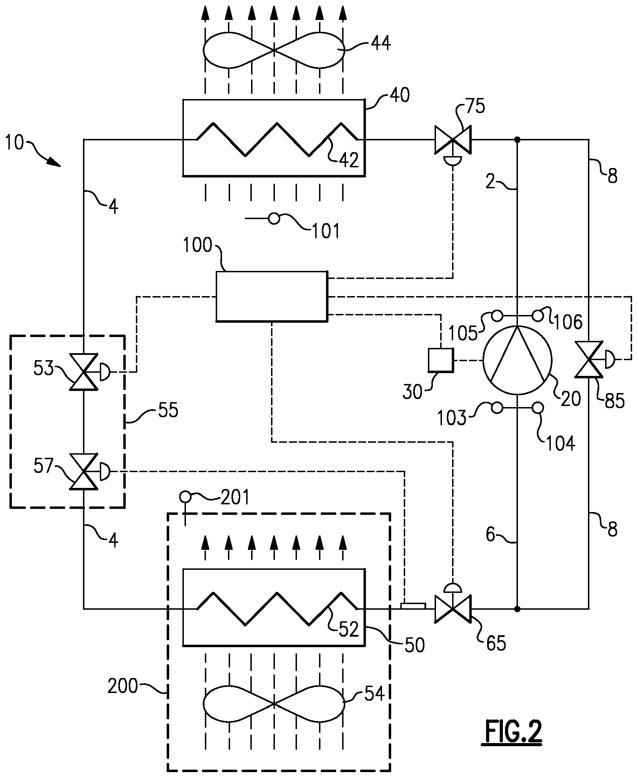

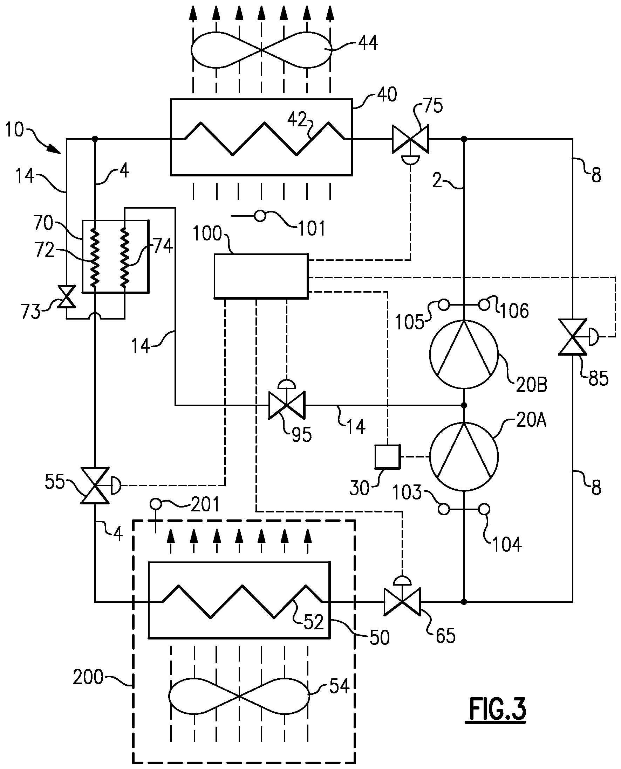

Referring now to FIGs. 1-3, the refrigerant vapor compression system 10 will be described herein in connection with the refrigeration of a temperature controlled cargo space 200 of a refrigerated container, trailer or truck for transporting perishable items. It is to be understood, however, that the refrigerant vapor compression system described herein could also be used in connection with refrigerating air for supply to a refrigerated display merchandiser or cold room associated with supermarket, convenience store, restaurant, or other commercial establishment or for conditioning air to be supplied to a climate controlled comfort zone within a residence, office building, hospital, school, restaurant or other facility. The refrigerant vapor compression system 10 includes a compression device 20 driven by a motor 30 operatively associated therewith, a refrigerant heat rejection heat exchanger 40, a refrigerant heat absorption heat exchanger 50, connected in a closed loop refrigerant circuit in series refrigerant flow arrangement by various refrigerant lines 2, 4 and 6. Additionally, an expansion device 55, operatively associated with the evaporator 50, is disposed in refrigerant line 4 downstream with respect to refrigerant flow of the refrigerant heat rejection heat exchanger 40 and upstream with respect to refrigerant flow of the refrigerant heat absorption heat exchanger 50. In the embodiment of the refrigerant vapor compression system 10 depicted in FIGs. 1 and 3, the expansion device 55 comprises an electronic expansion valve. However, in the embodiment depicted in FIG. 2, the expansion device 55 comprises a thermostatic expansion valve 57, or a fixed orifice device, such as a capillary tube, disposed in series refrigerant flow with an open/closed flow control device 53, such as a two-position solenoid valve.

When the refrigerant vapor compression system 10 is operating in a subcritical cycle, such as when charged with a conventional hydrochlorofluorocarbon refrigerant (HCFC), such as R22, or hydrofluorocarbon refrigerant (HFC), such as R134a, R410A and R407C, or carbon dioxide refrigerant when operating at a compressor discharge pressure below the critical point pressure of carbon dioxide of 7.38MPa (1070 psia), the refrigerant heat rejection heat exchanger 40 operates in the subcritical pressure range and functions as a refrigerant vapor condenser. However, when the refrigerant vapor compression system 10 is operating in a transcritical cycle, such as when charged with carbon dioxide refrigerant and operating at a compressor discharge pressure in excess of the critical pressure point of carbon dioxide, the refrigerant heat rejection heat exchanger 40 operates at supercritical pressure and functions as a refrigerant vapor cooler, but does not operate to condense the carbon dioxide refrigerant vapor. The tube bank 42 of the heat rejection heat exchanger 40 may comprise, for example, a finned tube heat exchanger, such as for example a plate fin and round tube heat exchanger coil, or a fin and multi-channel tube hat exchanger, such as for example fin and minichannel or microchannel flat tube heat exchanger. In traversing the refrigerant heat rejection heat exchanger 40, the refrigerant passes through the heat exchanger tubes of the tube bank 42 in heat exchange relationship a secondary fluid, typically ambient air, generally outdoor air, being drawn through the tube bank 42 by an air mover 45, such as one or more fans, operatively associated with the tube bank 42 of the heat rejection heat exchanger 40.

Whether the refrigerant vapor compression system 10 is operating in a subcritical cycle or a transcritical cycle, the refrigerant heat absorption heat exchanger 50, being located in the refrigerant circuit downstream with respect to refrigerant flow of the expansion device 55, always operates at a subcritical pressure and functions as a refrigerant liquid evaporator. In traversing the heat absorption heat exchanger 50, the refrigerant passes through the heat exchanger tubes of the tube bank 52 in heat exchange relationship with air to be conditioned, typically air drawn from and to be returned to a climate-controlled environment, being drawn through the tube bank 52 by an air mover 55, such as one or more fans, operatively associated with the tube bank 52 of the heat absorption heat exchanger 50, whereby the air is cooled and the refrigerant is heated and evaporated. The tube bank 52 of the refrigerant heat absorption heat exchanger 50 may comprise, for example, a finned tube heat exchanger, such as for example a plate fin and round tube heat exchanger coil, or a fin and multi-channel tube heat exchanger, such as for example a fin and minichannel or microchannel flat tube heat exchanger.

The compression device 20 functions to compress and circulate refrigerant through the refrigerant circuit as will be discussed in further detail hereinafter. The compression device 20 may be a single, single-stage compressor as depicted in FIGs. 1 and 2, such as for example a scroll compressor, a reciprocating compressor, a rotary compressor, a screw compressor, a centrifugal compressor. However, it is to be understood that the compression device 20 may also be a multiple-stage compression device having at least a lower pressure compression stage and a higher pressure compression stage with refrigerant flow passing from the lower pressure compression stage to the higher pressure compression stage, such as depicted in FIG. 3. In such an embodiment, the multiple-stage compression device may comprise a single, multi-stage compressor, such as, for example, a scroll compressor, or a screw compressor having staged compression pockets, or a reciprocating compressor having at least a first bank of cylinders and a second bank of cylinders, or a pair of single-stage compressors connected in series refrigerant flow relationship with the discharge outlet of the upstream compressor connected in serial refrigerant flow communication with the suction inlet of the downstream compressor

The drive motor 30 operatively associated with the compression mechanism of the compression device 20 may be a fixed-speed motor operating on power from a fixed frequency power source. The compression device 20 receives refrigerant vapor at suction pressure from the evaporator 50 through the refrigerant line 2 connected in refrigerant flow communication to the suction inlet of the compression device 20 and discharges refrigerant vapor at discharge pressure to the refrigerant heat rejection heat exchanger 40 through refrigerant line 2 connected in refrigerant flow communication with the discharge outlet of the compression device 20. A flow control device 65 is interdisposed in refrigerant 6 at a location downstream with respect to refrigerant flow of the evaporator 50 and upstream with respect to refrigerant flow of the suction inlet of the compression device 20. Additionally, a flow control device 75 is interdisposed in refrigerant 2 at a location downstream with respect to refrigerant flow of the discharge outlet of the compression device 20 and upstream with respect to refrigerant flow of the refrigerant heat rejection heat exchanger 40. Each of the flow control devices 65, 75 may be selectively positioned in at least a fully open position wherein refrigerant may flow through the flow control device and in a fully closed position wherein refrigerant can not flow through the flow control device. In an embodiment, each of the flow control devices 65, 75 comprise a two-position solenoid valve having an open position and a closed position.

Referring now to FIG. 3, in the exemplary embodiment of the refrigerant vapor compression system 10 depicted therein, the primary refrigerant circuit includes an economizer circuit in operative association therewith. The economizer circuit includes an economizer refrigerant line 14, an economizer expansion device 73, an economizer heat exchanger 70 and an economizer flow control valve 95. The economizer refrigerant line 14 establishes refrigerant flow communication between the refrigerant line 4 of the primary refrigerant circuit and an intermediate pressure stage of the compression process. The economizer heat exchanger 70 may comprise a refrigerant-to-refrigerant heat exchanger having a first refrigerant flow pass 72 and second refrigerant flow pass 74. The first refrigerant flow pass 72 is interdisposed in the refrigerant line 4 of the primary refrigerant circuit downstream with respect to refrigerant flow of the refrigerant outlet of the refrigerant heat rejection heat exchanger 40 and upstream with respect to refrigerant flow of the expansion device 55. The second refrigerant flow pass 74 is interdisposed in economizer refrigerant line 14. The economizer expansion device 73, which may be an electronic expansion valve, a thermostatic expansion valve, or a fixed orifice flow metering device, is disposed in economizer refrigerant line 14 upstream with respect to refrigerant flow therethrough of the second pass 74 of the refrigerant-to-refrigerant heat exchanger 70. The economizer flow control device 95, which may be a two position, open/closed solenoid valve, is interdisposed in the economizer refrigerant line 14 downstream of the second pass 74 of the economizer heat exchanger 70. In operation of the primary refrigerant circuit, the controller 100 may selectively open or close the economizer flow control device 95 to bring the economizer circuit on line or take it off line as in conventional practice to switch between economized and non-economized refrigeration cycles. If the expansion device 73 is an electronic expansion valve, the economizer flow control valve 95 may be omitted and the controller 100 may open and close the electronic expansion valve to bring the economizer circuit on line or take it off line.

The refrigerant vapor compression system 10 further includes a compressor unload circuit comprising an unloader refrigerant line 8 that interconnects refrigerant line 2 of the refrigerant circuit with refrigerant line 6 of the refrigerant circuit and an unloader valve 85 disposed in the unloader refrigerant line 8 that is operative to control the flow of refrigerant through unloader the refrigerant line 8 of the compressor unload circuit. In an embodiment, the unloader valve 85 comprises a two-position solenoid valve having an open position and a closed position. The unloader refrigerant line 8 taps into refrigerant line 2 at a location between the compression device 20 and the flow control valve 75, that is, downstream with respect to refrigerant flow of the discharge outlet of the compression device 20 and upstream with respect to refrigerant flow of the flow control valve 75 and taps into refrigerant line 6 a location between the flow control flow valve 65 and the compression device 20, that is, downstream with respect to refrigerant flow of the flow control valve 65 and upstream with respect to refrigerant flow of the suction inlet of the compression device 20. Thus, when the unloader control valve 85 is positioned in its open position, refrigerant vapor may flow from the discharge outlet of the compression device 20 through the unloader refrigerant line 8 directly back to the suction inlet of the compression device 20.

The refrigerant vapor compression system 10 also includes a controller 100 operatively associated with each of the respective flow control devices 65, 75 and 85 interdisposed in refrigerant lines 6, 2 and 8, respectively, for selectively positioning each of the respective flow control devices in an open or a closed position. The controller 100 also monitors the temperature of the ambient air passing into the refrigerant heat rejection heat exchanger 40 as the cooling medium via temperature sensor 101, the temperature of the air and/or the product within the temperature controlled cargo storage space 200 via temperature sensor 201, and various system operating parameters by means of various sensors operatively associated with the controller 100 and disposed at selected locations throughout the system. For example, in the exemplary embodiments depicted in FIGs. 1-3, a temperature sensor 103 and a pressure sensor 104 may be provided to sense the refrigerant suction temperature and pressure, respectively, and a temperature sensor 105 and a pressure sensor 106 may be provided to sense refrigerant discharge temperature and pressure, respectively. The pressure sensors may be conventional pressure sensors, such as for example, pressure transducers, and the temperature sensors may be conventional temperature sensors, such as for example, thermocouples or thermistors.

The controller 100 controls operation of the refrigerant vapor compression system 10 and selective positioning of the flow control devices 65, 75 and 85, and the economizer flow control valve 95, if present. The controller 100 also controls operation of the compressor drive motor 30 driving the compression mechanism of the compression device 20, as well as operation of the fans 44 and 54, through control of the respective fan motors (not shown) operatively associated therewith. The controller 100 determines the desired mode of operation based upon a comparison of the sensed temperature of the air and/or product within the cargo storage space 200 and a set point temperature representative of the desired storage temperature during transport for the product stored therein. If the temperature of the product within the cargo storage space 200 exceeds the set point temperature by more than a few degrees, such as is the case upon initial start-up of the refrigerant vapor compression system 10 after loading product into the space 200, the controller 100 operates the refrigerant vapor compression system 10 at high capacity in a pull down mode. However, if the temperature of the product within the cargo storage space 200 is within a preselected range of the set point temperature, the controller 100 operates the refrigerant vapor compression system 10 at a reduced capacity in a set point control mode.

To operate the refrigerant vapor compression system 10 in a pull down mode, the controller 100 closes the unloader valve 85 and opens both the suction flow control valve 65 and the discharge flow control valve 75 so that refrigerant circulates through refrigerant lines 2, 4 and 6 the primary refrigerant circuit, but not through refrigerant line 8 of the unloader circuit. The controller 100 selectively opens the unloader circuit control device 75, which comprises a fixed flow area valve, such as for example a fixed orifice solenoid valve, in response to the sensed air temperature entering the evaporator from the temperature controlled space 200 which is indicative of the temperature of the air or product within the temperature controlled space. However, it is to be understood that other system parameters may be used by the controller 100 in determining when to open the unloader circuit control valve 85.

In the embodiments depicted in FIGs. 1 and 3, in the pull down mode, the controller 100 also modulates the flow of refrigerant to the evaporator 50 by varying the flow area of the flow passage through the electronic expansion valve 55, in response to the refrigerant suction temperature or pressure, sensed by the sensors 103 and 104, respectively, on the suction side of the compression device 20. If the suction pressure drops too low, it is an indication that the system is providing too much capacity. In the embodiment depicted in FIG. 3, in the pull down mode, the controller 100 may also selectively switch between operation in a non-economized refrigeration cycle and operation in an economized refrigerant cycle by selectively opening or closing the economizer flow control valve 95.

The controller 100 can unload the compression device 20 as necessary to control the refrigeration capacity of the refrigerant vapor compression system 10. For example, when the sensed temperature of the air and/or product within the cargo storage space 200 has been reduced to within a few degrees of the set point temperature representative of the desired temperature for transporting the product stored therein, the controller 100 switches operation from the pull down mode to the set point control mode. To do so, the controller 100 opens the flow control device 85 interdisposed in unloader refrigerant line 8 and simultaneously closes both of the flow control valves 65 and 75 interdisposed in the primary refrigerant circuit, as well as the economizer flow control valve 95, if present. With the unloader flow control device 85 open, the refrigerant vapor discharging from the compression device 20 passes through the unload circuit refrigerant line 8 to return directly to the suction side of the compression device 20, thereby unloading the compression device 20. This unloading of the compression device 20 through the unload circuit may also be implemented in response to a high compressor discharge refrigerant temperature or pressure.

To operate the refrigerant vapor compression system in the set point control mode, the controller 100 modulates the refrigeration capacity of the refrigerant vapor compression system 10 by selectively loading and unloading the compression device 20. The controller 10 does so by alternately opening and closing the unloader flow control device for short periods of time, while simultaneously closing and opening the flow control devices 65 and 75. Thus, the controller 100 operates the system 10 in a load cycle for a first period of time by closing the unloader flow control device 85 and, in synchronization therewith, opening the flow control devices 65 and 75, then operates the system 10 in an unload cycle for a second period of time by opening the unloader flow control device 85 and, in synchronization therewith, closing the flow control devices 65 and 75.

In an alternate embodiment of the refrigerant vapor compression system 10, the flow control device 65 may be deleted. In this case, if the expansion device 55 is an expansion valve 55 as depicted in FIG. 1, the controller 100 closes the expansion valve 55 when the unloader flow control device 85 is open, that is when the system is operating in an unloaded cycle, but when the system 10 is operating in a loaded mode with the unloader flow control device is closed and the flow control device 75 open, the controller 100 modulates the degree of openness of the expansion device 55 to control the flow of refrigerant to the evaporator 50. However, if the expansion device 55 comprises a thermostatic expansion valve 57, or a fixed orifice device, in combination with a flow control valve 53 as depicted in FIG. 2, the controller closes the flow control valve 53 when the unloader flow control device 85 is open, that is when the system is operating in an unloaded cycle. When the system is operating in a loaded mode, the thermostatic expansion valve 57 controls the flow of refrigerant to the evaporator 50 in a conventional manner in response to the temperature of the refrigerant vapor leaving the evaporator 50 as sensed by a temperature bulb 59, typically mounted to refrigerant line 6 downstream of the outlet of the evaporator 50.

The compression device 20 keeps running during both the loaded cycle and the unloaded cycle, but during the unloaded cycle, the compression device 20 does not generate a pressure increase from suction to discharge as the refrigerant vapor discharging from the compression device 20 passes back to the suction inlet of the compression device 20 through the unload circuit with minimal pressure drop. With the flow control device 75 closed during the unloaded cycle, flow reversal of refrigerant in the high-pressure side of the primary refrigerant circuit is prevented. Rather, refrigerant continues to slowly flow from the refrigerant heat rejection heat exchanger 40 through the expansion device 55 into the refrigerant heat absorption heat exchanger 50. To prevent refrigerant flow reversal during operation of the system 10 in the unloaded cycle, the controller 100 closes not only the flow control device 75, but also the flow control device 65, or if the flow control device 65 is not present the expansion valve 55 or flow control valve 53, and also closes the economizer flow control valve 95, if present. Preventing refrigerant flow reversal during operation promotes a fast and efficient switch from the unloaded cycle of operation to the loaded cycle of operation, because the refrigerant mass in the primary refrigerant circuit does not have to redistribute, as would be the case if the pressures within the refrigerant circuit between the high-pressure side (i.e. upstream with respect to refrigerant flow of the expansion valve 55) and the low-pressure side (i.e. downstream with respect to refrigerant flow of the expansion valve 55) had become equalized as a result of flow reversal.

The controller 100 also keeps the evaporator fan 54 operating during the unloaded cycle so that air continues to circulate from the cargo storage space 200 over the heat exchanger coil 52 of the evaporator 50. Therefore, the refrigeration of this air continues even during operation of the refrigerant vapor compression system 10 in the unloaded cycle, albeit at much less refrigeration capacity than the refrigeration capacity of the system when operating at full load. By repeatedly alternating operation of the refrigerant vapor compression system 10 between a loaded cycle for a first period of time and a unloaded cycle for a second period of time, the overall refrigeration capacity of the system, averaged over time, during the set point control operating mode is a relatively small fraction of the refrigeration capacity of the system 10 when operating at full load as during the pull down operating mode. Likewise, the power consumed by the compression device 20 during the unloaded cycle is a relatively small fraction of the power consumed by the compression device 20 when operating at full load as during the pull down operating mode. Keeping the compression device 20 running during the unloaded cycle, as opposed to turning the compression device 20 off during the unloaded cycle, reduces the number of times the compressor is started, which extends the expected life of the compression device by reducing the risk of premature failure and also reduces energy consumption due to motor inefficiency during start-up.

Thus, the refrigerant vapor compression system 10 includes a primary refrigerant circuit and an unload circuit arranged in parallel with respect to refrigerant flow. When the system is operating in a loaded cycle, refrigerant flows through the primary circuit from the compression device 20 through the refrigerant heat rejection heat exchanger 40, thence the expansion device 55 and the refrigerant heat absorption heat exchanger 50 and before returning to the compression device 20. In the loaded cycle, the unload circuit is closed to refrigerant flow. When the system is operating in an unloaded cycle, the primary refrigerant circuit is closed to refrigerant flow and refrigerant flows through the unload circuit from the discharge outlet of the compression device 20 to return to the suction inlet of the compression device, while bypassing the refrigerant heat rejection heat exchanger 40, the expansion device 55 and the refrigerant heat absorption heat exchanger 50.

In full-load operation, the controller 100 opens both of the flow control devices 65 and 75, and simultaneously closes the unloader flow control device 85, whereby the primary refrigerant circuit is open to refrigerant flow and the unload circuit is closed to refrigerant flow. In part-load operation, the controller 100 modulates the capacity of a refrigerant vapor compression system 10 by first operating the compression device 20 in a loaded cycle for a first period of time; then operating the compression device 20 in an unloaded cycle for a second period of time; and thereafter repeatedly alternating operation of the compression device 20 between operation in the loaded cycle and the unloaded cycle.

The embodiments depicted in FIGs. 1 - 3 are meant to be exemplary, not limiting, of the application of a compression device unloader circuit in parallel with a primary refrigerant circuit of a refrigerant vapor compression system. It is to be understood that the primary refrigerant circuit may include other conventional components and associated refrigerant circuits. For example, the primary refrigerant circuit could also include an interstage cooling circuit in operative association with the compression device for passing the refrigerant passing from one compression stage to another compression stage through a refrigerant cooler.

The controller 100 may be an electronic controller, such as a microprocessor controller, or any other controller of the type conventionally used in connection with controlling the operation of a refrigerant vapor compression system. For example, in transport refrigeration applications, the controller 100 could be a MicroLink™ series microprocessor controller, such as the ML2 model, the ML2i model or ML3 model, available from Carrier Corporation, Syracuse, N.Y., USA. It is to be understood, however, that any controller capable of performing the functions discussed hereinbefore with respect to controller 100 may be used in the refrigerant vapor compression system of the invention and in carrying out the method of the invention.

The foregoing description is only exemplary of the teachings of the invention. Those of ordinary skill in the art will recognize that various modifications and variations may be made to the invention as specifically described herein and equivalents thereof without departing from the scope of the invention as defined by the following claims.

## Claims

1. A refrigerant vapor compression system comprising:
a refrigerant compression device (20) having a refrigerant discharge outlet and a refrigerant suction inlet, a refrigerant heat rejection heat exchanger (40) for passing refrigerant received from said compression device (20) at a high pressure in heat exchange relationship with a cooling medium, and a refrigerant heat absorption heat exchanger (50) for passing refrigerant at a low pressure refrigerant in heat exchange relationship with a heating medium disposed in serial refrigerant flow communication in a primary refrigerant circuit;
an expansion device (55) disposed in the primary refrigerant circuit downstream of said refrigerant heat rejection heat exchanger (40) and upstream of said refrigerant heating heat exchanger (50);
a first flow control device (75) disposed in the primary refrigerant circuit downstream with respect to refrigerant flow of the discharge outlet of said compression device (20) and upstream with respect to refrigerant flow of the refrigerant heat rejection heat exchanger (40);
an unload circuit operatively associated with said compression device (20) including an unload refrigerant line (8) having an inlet in refrigerant flow communication with the primary refrigerant circuit at a first location downstream with respect to refrigerant flow of the discharge outlet of said compression device (20) and upstream with respect to refrigerant flow of said first flow control device (75) and at a second location downstream with respect to refrigerant flow of said refrigerant heat absorption heat exchanger (50) and upstream with respect to refrigerant flow of the suction inlet to said compression device (20), and a unload circuit flow control device (85) disposed in said unload refrigerant line (8); and
a controller (100) operatively associated with said first flow control device (75) and said unload circuit flow control device (85), said controller (100) operative to switch said refrigerant vapor compression system (10) between a first operating mode wherein said compression device (20) operates in a loaded cycle and a second operating mode wherein said compression device (20) operates in an unloaded cycle; **characterised in that**:
the controller (100) positions said unload circuit flow control device (85) in an open position and positions said first flow control device (75) in a closed position to operate said refrigerant vapor compression system (10) in the second operating mode; and
the controller (100) positions said expansion device (55) in a closed position in the second operating mode.

2. A refrigerant vapor compression system as recited in claim 1 wherein the controller (100) positions said unload circuit flow control device (85) in a closed position and positions said first flow control device (75) in an open position to operate said refrigerant vapor compression system (10) in the first operating mode.

3. A refrigerant vapor compression system as recited in claim 2 wherein the controller (100) modulates said expansion device (55) in the first operating mode.

4. A refrigerant vapor compression system as recited in any preceding claim further comprising:
a second flow control device (65) disposed in the primary refrigerant circuit downstream with respect to refrigerant flow of the refrigerant heat absorption heat exchanger (50) and upstream with respect to refrigerant flow of the suction inlet of said compression device (20).

5. A refrigerant vapor compression system as recited in claim 4 wherein the controller (100) positions said unload circuit flow control device (85) in a closed position and positions each of said first flow control device (75) and said second flow control device (65) in a open position to operate said refrigerant vapor compression system (10) in the first operating mode.

6. A refrigerant vapor compression system as recited in claim 5 wherein the controller (100) modulates said expansion device (55) in the first operating mode.

7. A refrigerant vapor compression system as recited in claim 4, 5 or 6, wherein the controller (100) positions said unload circuit flow control device (85) in a open position and positions each of said first flow control device (75) and said second flow control device (65) in a closed position to operate said refrigerant vapor compression system (10) in the second operating mode.

## Patentansprüche

1. Kältemitteldampfkompressionsanlage, umfassend:
eine Kühlmittelkompressionsvorrichtung (20) mit einem Kühlmittelabgabeauslass und einem Kühlmittelansaugeinlass, einen Kühlmittelwärmeabgabewärmetauscher (40) zum Leiten von Kühlmittel, das aus der Kompressionsvorrichtung (20) bei einem hohen Druck in der Wärmeaustauschbeziehung mit einem Kühlmedium empfangen wurde, und einen Kühlmittelwärmeabsorptionswärmetauscher (50) zum Leiten von Kühlmittel bei einem niedrigen Druck in einer Wärmeaustauschbeziehung mit einem Heizmedium, das in serieller Kühlmittelfließverbindung in einem primären Kühlmittelkreis angeordnet ist;
eine Expansionsvorrichtung (55), die im primären Kühlmittelkreis angeordnet ist, der dem Kühlmittelwärmeabgabewärmetauscher (40) nachgelagert und dem Kühlmittelerwärmungswärmetauscher (50) vorgelagert ist;
eine erste Stromregelvorrichtung (75), die im primären Kühlmittelkreis angeordnet ist, der in Bezug auf den Kühlmittelstrom des Abgabeauslasses der Kompressionsvorrichtung (20) nachgelagert und in Bezug auf den Kühlmittelstrom des Kühlmittelwärmeabgabewärmetauschers (40) vorgelagert ist;
einen Entladekreis, der operativ mit der Kompressionsvorrichtung (20) verbunden ist, die eine Entladekühlmittelleitung (8) mit einem Einlass in Kühlmittelfließverbindung mit dem primären Kühlmittelkreis an einer ersten Stelle, die in Bezug auf den Kühlmittelstrom des Abgabeauslasses der Kompressionsvorrichtung (20) nachgelagert und in Bezug auf den Kühlmittelstrom der ersten Stromregelvorrichtung (75) vorgelagert ist, und an einer zweiten Stelle, die in Bezug auf den Kühlmittelstrom des Kühlmittelwärmeabsorptionswärmetauschers (50) nachgelagert und in Bezug auf den Kühlmittelstrom des Ansaugeinlasses in die Kompressionsvorrichtung (20) vorgelagert ist, und eine Entladekreisstromregelvorrichtung (85), die in der Entladekühlmittelleitung (8) angeordnet ist, einschließt; und
eine Steuerung (100), die operativ mit der ersten Stromregelvorrichtung (75) und der Entladekreisstromregelvorrichtung (85) verbunden ist, wobei die Steuerung (100) arbeitet, um die Kühlmitteldampfkompressionsanlage (10) zwischen einem ersten Betriebsmodus, wobei die Kompressionsvorrichtung (20) in einem bestückten Zyklus arbeitet, und einem zweiten Betriebsmodus, wobei die Kompressionsvorrichtung (20) in einem unbestückten Zyklus arbeitet, zu wechseln; **dadurch gekennzeichnet, dass**:
die Steuerung (100) die Entladekreisstromregelvorrichtung (85) in einer offenen Position positioniert und die erste Stromregelvorrichtung (75) in einer geschlossenen Position positioniert, um die Kühlmitteldampfkompressionsanlage (10) im zweiten Betriebsmodus zu betreiben; und
die Steuerung (100) die Expansionsvorrichtung (55) in einer geschlossenen Position im zweiten Betriebsmodus positioniert.

2. Kältemitteldampfkompressionsanlage nach Anspruch 1, wobei die Steuerung (100) die Entladekreisstromregelvorrichtung (85) in einer geschlossenen Position positioniert und die erste Stromregelvorrichtung (75) in einer offenen Position positioniert, um die Kühlmitteldampfkompressionsanlage (10) im ersten Betriebsmodus bereitzustellen.

3. Kältemitteldampfkompressionsanlage nach Anspruch 2, wobei die Steuerung (100) die Expansionsvorrichtung (55) im ersten Betriebsmodus moduliert.

4. Kältemitteldampfkompressionsanlage nach einem der vorangegangenen Ansprüche, ferner umfassend:
eine zweite Stromregelvorrichtung (65), die im primären Kühlmittelkreis angeordnet ist, der in Bezug auf den Kühlmittelstrom des Kühlmittelwärmeabsorptionswärmetauschers (50) nachgelagert und in Bezug auf den Kühlmittelstrom des Ansaugeinlasses der Kompressionsanlage (20) vorgelagert ist.

5. Kältemitteldampfkompressionsanlage nach Anspruch 4, wobei die Steuerung (100) die Entladekreisstromregelvorrichtung (85) in einer geschlossenen Position positioniert und jede der ersten Stromregelvorrichtung (75) und der zweiten Stromregelvorrichtung (65) in einer offenen Position positioniert, und die Kühlmitteldampfkompressionsanlage (10) im ersten Betriebsmodus zu betreiben.

6. Kältemitteldampfkompressionsanlage nach Anspruch 5, wobei die Steuerung (100) die Expansionsvorrichtung (55) im ersten Betriebsmodus moduliert.

7. Kältemitteldampfkompressionsanlage nach Anspruch 4, 5 oder 6, wobei die Steuerung (100) die Entladekreisstromregelvorrichtung (85) in einer offenen Position positioniert und jede der ersten Stromregelvorrichtungen (75) und der zweiten Stromregelvorrichtung (65) in einer geschlossenen Position positioniert, um die Kühlmitteldampfkompressionsanlage (10) im zweiten Betriebsmodus zu betreiben.

## Revendications

1. Système de compression de vapeur de fluide frigorigène comprenant :
un dispositif de compression de fluide frigorigène (20) ayant un orifice de sortie d'évacuation de fluide frigorigène et un orifice d'entrée d'aspiration de fluide frigorigène, un échangeur de chaleur à rejet de chaleur de fluide frigorigène (40) pour faire passer le fluide frigorigène reçu dudit dispositif de compression (20) à une pression élevée dans une relation d'échange de chaleur avec un milieu refroidissant, et un échangeur de chaleur à absorption de chaleur de fluide frigorigène (50) pour faire passer le fluide frigorigène à une basse pression dans une relation d'échange de chaleur avec un milieu chauffant disposé en communication d'écoulement de fluide frigorigène en série dans un circuit de fluide frigorigène primaire ;
un détendeur (55) disposé dans le circuit de fluide frigorigène primaire en aval dudit échangeur de chaleur à rejet de chaleur de fluide frigorigène (40) et en amont dudit échangeur de chaleur à chauffage de fluide frigorigène (50) ;
un premier dispositif de commande d'écoulement (75) disposé dans le circuit de fluide frigorigène primaire en aval par rapport à l'écoulement de fluide frigorigène de l'orifice de sortie d'évacuation dudit dispositif de compression (20) et en amont par rapport à l'écoulement de fluide frigorigène de l'échangeur de chaleur à rejet de chaleur de fluide frigorigène (40) ;
un circuit de décharge associé opérationnellement audit dispositif de compression (20) incluant une conduite de fluide frigorigène de décharge (8) ayant un orifice d'entrée en communication d'écoulement de fluide frigorigène avec le circuit de fluide frigorigène primaire dans un premier emplacement en aval par rapport à l'écoulement de fluide frigorigène de l'orifice de sortie d'évacuation dudit dispositif de compression (20) et en amont par rapport à l'écoulement de fluide frigorigène dudit premier dispositif de commande d'écoulement (75) et dans un second emplacement en aval par rapport à l'écoulement de fluide frigorigène dudit échangeur de chaleur à absorption de chaleur de fluide frigorigène (50) et en amont par rapport à l'écoulement de fluide frigorigène de l'orifice d'entrée d'aspiration vers ledit dispositif de compression (20), et un dispositif de commande d'écoulement de circuit de décharge (85) disposé dans ladite conduite de fluide frigorigène de décharge (8) ; et
une unité de commande (100) associée opérationnellement audit premier dispositif de commande d'écoulement (75) et audit dispositif de commande d'écoulement de circuit de décharge (85), ladite unité de commande (100) servant à commuter ledit système de compression de vapeur de fluide frigorigène (10) entre un premier mode de fonctionnement dans lequel ledit dispositif de compression (20) fonctionne dans un cycle chargé et un second mode de fonctionnement dans lequel ledit dispositif de compression (20) fonctionne dans un cycle déchargé ; caractérisé en ce qui :
l'unité de commande (100) positionne ledit dispositif de commande d'écoulement de circuit de décharge (85) dans une position ouverte et positionne ledit premier dispositif de commande d'écoulement (75) dans une position fermée pour actionner ledit système de compression de vapeur de fluide frigorigène (10) dans le second mode de fonctionnement ; et
l'unité de commande (100) positionne ledit détendeur (55) dans une position fermée dans le second mode de fonctionnement.

2. Système de compression de vapeur de fluide frigorigène selon la revendication 1 dans lequel l'unité de commande (100) positionne ledit dispositif de commande d'écoulement de circuit de décharge (85) dans une position fermée et positionne ledit premier dispositif de commande d'écoulement (75) dans une position ouverte pour actionner ledit système de compression de vapeur de fluide frigorigène (10) dans le premier mode de fonctionnement.

3. Système de compression de vapeur de fluide frigorigène selon la revendication 2, dans lequel l'unité de commande (100) module ledit détendeur (55) dans le premier mode de fonctionnement.

4. Système de compression de vapeur de fluide frigorigène selon une quelconque revendication précédente comprenant en outre :
un second dispositif de commande d'écoulement (65) disposé dans le circuit de fluide frigorigène primaire en aval par rapport à l'écoulement de fluide frigorigène de l'échangeur de chaleur à absorption de chaleur de fluide frigorigène (50) et en amont par rapport à l'écoulement de fluide frigorigène de l'orifice d'entrée d'aspiration dudit dispositif de compression (20).

5. Système de compression de vapeur de fluide frigorigène selon la revendication 4 dans lequel l'unité de commande (100) positionne ledit dispositif de commande d'écoulement de circuit de décharge (85) dans une position fermée et positionne chacun dudit premier dispositif de commande d'écoulement (75) et dudit second dispositif de commande d'écoulement (65) dans une position ouverte pour actionner ledit système de compression de vapeur de fluide frigorigène (10) dans le premier mode de fonctionnement.

6. Système de compression de vapeur de fluide frigorigène selon la revendication 5, dans lequel l'unité de commande (100) module ledit détendeur (55) dans le premier mode de fonctionnement.

7. Système de compression de vapeur de fluide frigorigène selon la revendication 4, 5 ou 6, dans lequel l'unité de commande (100) positionne ledit dispositif de commande d'écoulement de circuit de décharge (85) dans une position ouverte et positionne chacun dudit premier dispositif de commande d'écoulement (75) et dudit second dispositif de commande d'écoulement (65) dans une position fermée pour actionner ledit système de compression de vapeur de fluide frigorigène (10) dans le second mode de fonctionnement.
